# EUROPÄISCHE PATENTSCHRIFT

(11) **EP 0 349 813 B1**
(45) Veröffentlichungstag und Bekanntmachung des Hinweises auf die Patenterteilung: **09.03.1994**
(21) Anmeldenummer: 89111065.2
(22) Anmeldetag: 19.06.1989
(51) Int. Cl.: G03B 27/40

(54) **Blendeneinstellvorrichtung in einem fotografischen Vergrösserungs- oder Kopiergerät mit mehreren Objektiven mit verstellbarer Blende**
Diaphragm adjusting mechanism in a photographic enlarger or copier with several changeable diaphrams
Agrandisseur ou copieur avec plusieurs objectifs pourvus d'un diaphragme réglable et d'un système pour ajuster ces diaphragmes

(30) Priorität: 03.07.1988 IT 483988
(43) Veröffentlichungstag der Anmeldung: 10.01.1990
(73) Patentinhaber: DURST PHOTOTECHNIK A.G., 39042 Brixen (IT)
(72) Erfinder: Gandini, Mario, I-39042 Brixen/Milland (IT); Obertegger, Franz, I-39042 Brixen/Milland (IT)

(56) Entgegenhaltungen:
- EP-A- 0 250 368
- DE-A- 1 597 237
- DE-A- 2 264 554
- GB-A- 2 088 573

## Beschreibung

Die Erfindung betrifft ein fotografisches Vergrößerungs- oder Kopiergerät mit mehreren Objektiven mit verstellbarer Blende und einer Blendeneinstellvorrichtung gemäß dem Oberbegriff des Anspruchs 1.

Bekannte fotografische Vergrößerungsgeräte sind so eingerichtet, daß mit ihnen fotografische Abzüge in verschiedenen Formaten und ausgehend von Kopiervorlagen, die ebenfalls in unterschiedlichen Formaten vorliegen, hergestellt werden können. Um die Vielzahl der vorhandenen Formate und den dafür erforderlichen Vergrößerungsbereich zu decken, sind derartige Vergrösserungsgeräte mit mehreren Objektiven unterschiedlicher Brennweite ausgestattet, die wahlweise in die Arbeitsstellung bewegbar sind. Jedes Objektiv ist in der Regel außerdem mit einer einstellbaren Blende versehen, um die Intensität des Kopierlichtes den spezifischen Gegebenheiten der auszuführenden Belichtung anzupassen.

In der deutschen Patentschrift DE-C 30 45 157 ist ein Objektivschlitten mit drei Objektiven beschrieben, wo die Blenden der einzelnen Objektive über einen gemeinsamen Einsteller manuell auf vorgegebene, jeweils einem festgelegten Blendenwert entsprechende Positionen einstellbar sind und die Einstellpositionen mittels entsprechend angeordneter, untereinander und mit einer Reihe Signallampen elektrisch verbundener Mikroschalter erfaßt werden. Eine derartige Einrichtung eignet sich für das Einstellen und Erfassen nur einer beschränkten Anzahl von Blendenwerten und ist außerdem ungeeignet für die Einbeziehung in ein automatisches Steuersystem, wie es moderne Vergrößerungsgeräte in Verbindung mit der Belichtungssteuerung und anderen Meß- und Kontrollfunktionen aufweisen. Im übrigen bedeutet die manuelle Einstellung der Objektivblenden nicht nur eine Einschränkung des automatischen Betriebes des Vergrößerungsgerätes mit entsprechender Verlängerung der Bearbeitungszeiten; sie ist darüber hinaus eine Fehlerquelle wegen der Gefahr, daß der der Belichtungsberechnung zugrundeliegende Blendenwert nicht mit dem tatsächlich eingestellten Blendenwert übereinstimmt. Ohne eine direkte Kommunikation zwischen Blendeneinstellung und Belichtungssteuerung des Vergrößerungsgerätes bleibt es nämlich der Bedienungsperson überlassen, den Blendenwert einzustellen, der der Belichtungsberechnung zugrundeliegt bzw. einen eingestellten Blendenwert korrekt auf die Belichtungssteuerung zu übertragen.

Aus der DE-A-2 264 554 ist weiters eine Steuerschaltung zur automatischen Einstellung einer motorisch bewegbaren Objektivblende einer Filmkamera bekannt. Dabei wird an einer Sektorlamelle reflektiertes Licht gemessen und ausgewertet und die Blende mittels eines Gleichstrommotors, der durch die Größe und Richtung der Diagonalspannung einer Widerstandsbrückenschaltung gesteuert wird, auf einen der jeweils erforderlichen Filmbelichtung entsprechenden Wert eingestellt.

Schließlich ist aus der EP-A-0 250 368 eine fotografische Kopiervorrichtung bekannt, deren Beleuchtungseinrichtung ein variables Beleuchtungsobjektiv (Zoom) mit bewegbaren Linsen aufweist, mittels welchen die Größe der vom Kopierlicht beaufschlagten Vorlagenflächen an das jeweils eingestellte Vorlagenformat anpaßbar ist. Dabei erfolgt die Einstellung der Linsen mittels Schrittmotoren, die an eine elektronische Steuerschaltung angeschlossen sind, welche eine Information über das Format der Kopiervorlage erhält.

Die Aufgabe der Erfindung besteht darin, in einem Vergrößerungsgerät mit mehreren Objektiven mit einstellbarer Blende eine Blendeneinstellvorrichtung zu schaffen, in der die Blendeneinstellung kontinuierlich steuerbar und die Blende eines jeden Objektivs in Anpassung an die individuelle Einstellcharakteristik automatisch auf vorgebbare Werte einstellbar ist. Die Vorrichtung soll einfach und platzsparend in der Konstruktion sein, so daß sie sich für einen Optikträger kompakter Bauart eignet.

Erfindungsmäßig wird diese Aufgabe mit einer Blendeneinstellvorrichtung gelöst, die Mittel zum gemeinsamen Verstellen der Blenden aller Objektive und Mittel zum Erfassen der Ist-Position der Blenden aufweist und dadurch gekennzeichnet ist, daß die Mittel zum Erfassen der Ist-Position der Blenden für eine kontinuierliche Positionserfassung ausgelegt sind, die Mittel zum Verstellen der Blenden einen motorischen Antrieb umfassen, und daß die Blendeneinstellvorrichtung einen Regelkreis umfaßt, der durch Vergleich der Ist-Position der Blenden mit einer vorgegebenen Soll-Position ein Steuersignal für den Antrieb zum Bewegen der Blenden in die vorgesehene Soll-Position erzeugt, und daß weiters eine Einrichtung zur Identifizierung des in der Arbeitsstellung befindlichen Objektivs vorgesehen ist für eine differenzierte Steuerung der Blende eines jeden Objektivs entsprechend seiner individuellen Einstellcharakteristik.

In einer bevorzugten Ausführungsform sind die Blenden der einzelnen Objektive über einen Zahnriemen, der die Blendenringe und den Antrieb umgreift, bewegungsverbunden.

Eine besonders vorteilhafte und platzsparende Ausführung ergibt sich durch den Einsatz eines Schrittmotors, weil die Anzahl der ausgeführten Schritte unmittelbar ein Maß für den Verstellweg ergibt, ohne die Notwendigkeit anderer Einrichtungen zur Positionserfassung. In einer anderen Ausführung kann als Antrieb ein Gleichstrommotor in Verbindung mit einem gesonderten Weggeber für den Verstellweg Verwendung finden.

In der bevorzugten Ausführungsform der Erfindung ist die Blendeneinstellung von einem Mikroprozessorsystem gesteuert. Damit ist die Möglichkeit geboten, in der Ausführung des Steuerprogramms die individuelle Regelcharakteristik der Blende jedes einzelnen Objektivs zu berücksichtigen.

Weitere Merkmale und Vorteile der Erfindung ergeben sich aus den Ansprüchen in Verbindung mit der nachfolgenden Beschreibung eines bevorzugten Ausführungsbeispiels unter Bezugnahme auf die beigefügten Zeichnungen.
Diese zeigen:
- Fig. 1: eine schematische Darstellung eines fotografischen Vergrößerungsgerätes in seitlichem Aufriß, teilweise im Schnitt;
- Fig. 2: eine perspektivische Ansicht des Optikträgers des Vergrößerungsgerätes der Fig. 1;
- Fig. 4: eine Schnittansicht des Optikträgers der Fig. 2;

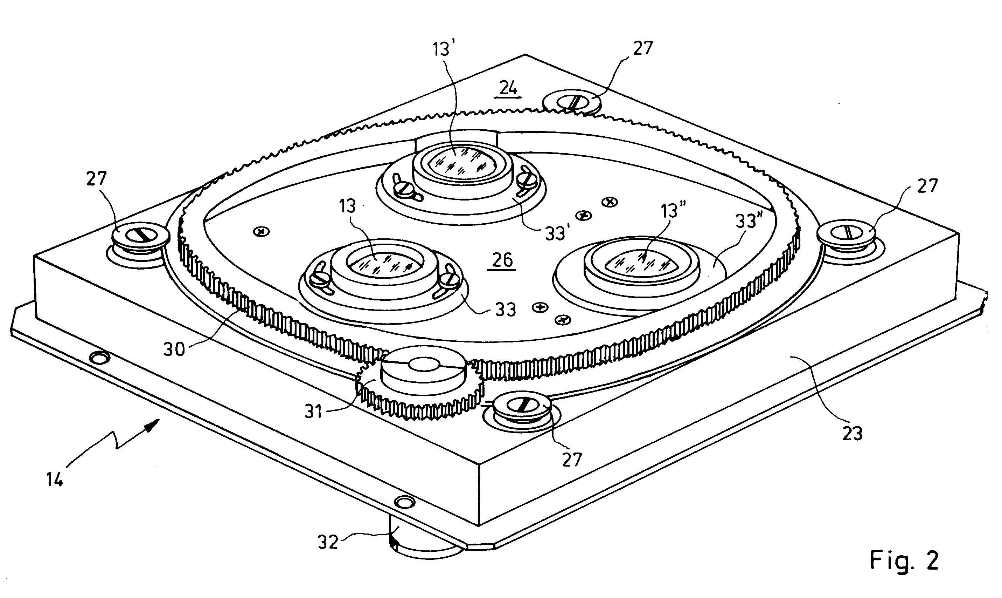

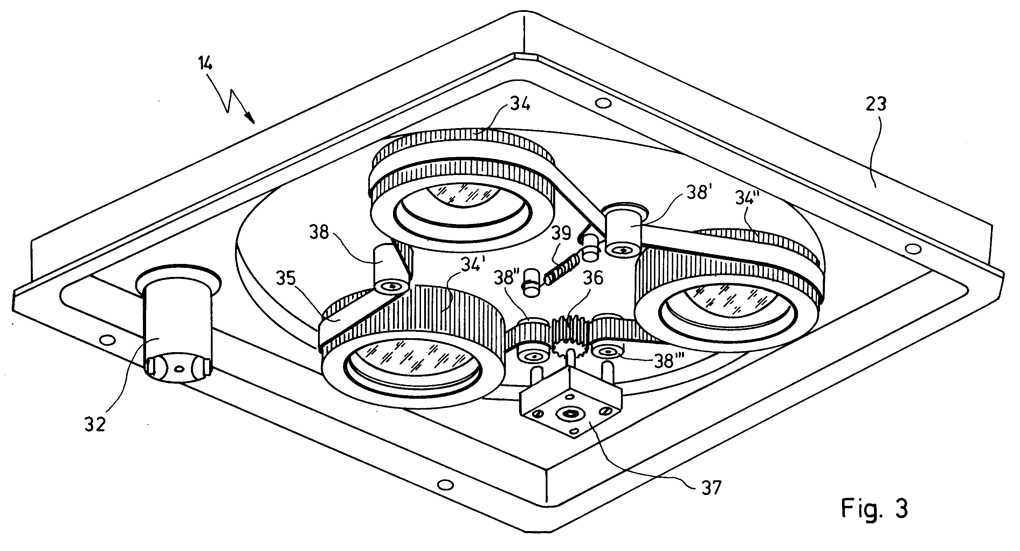

- Fig. 3: eine Ansicht von unten des Optikträgers der Fig. 2;

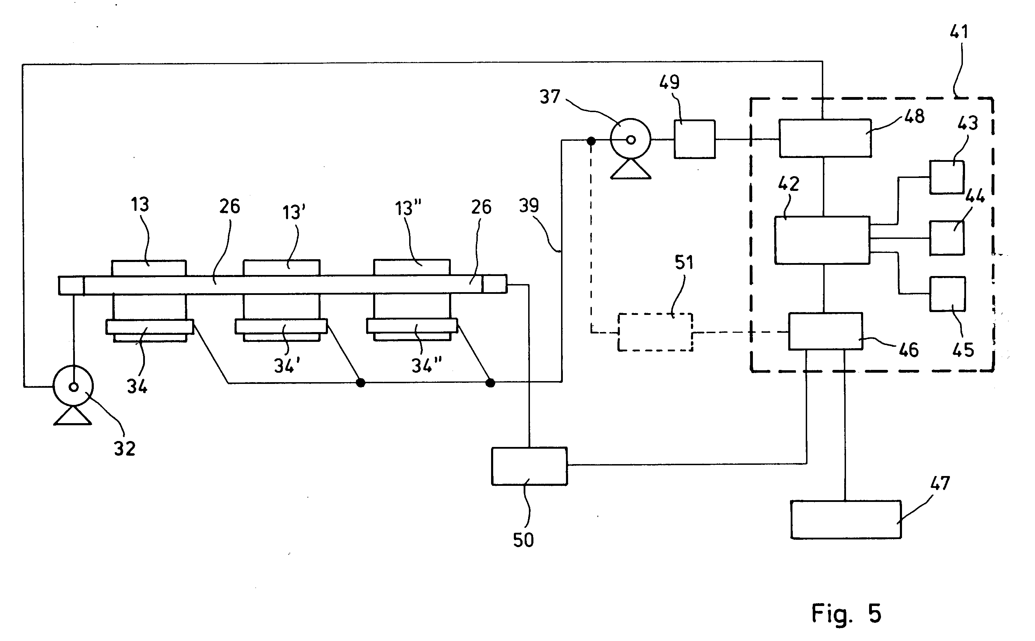

- Fig. 5: ein Funktionsschaltbild der Blendeneinstellvorrichtung.

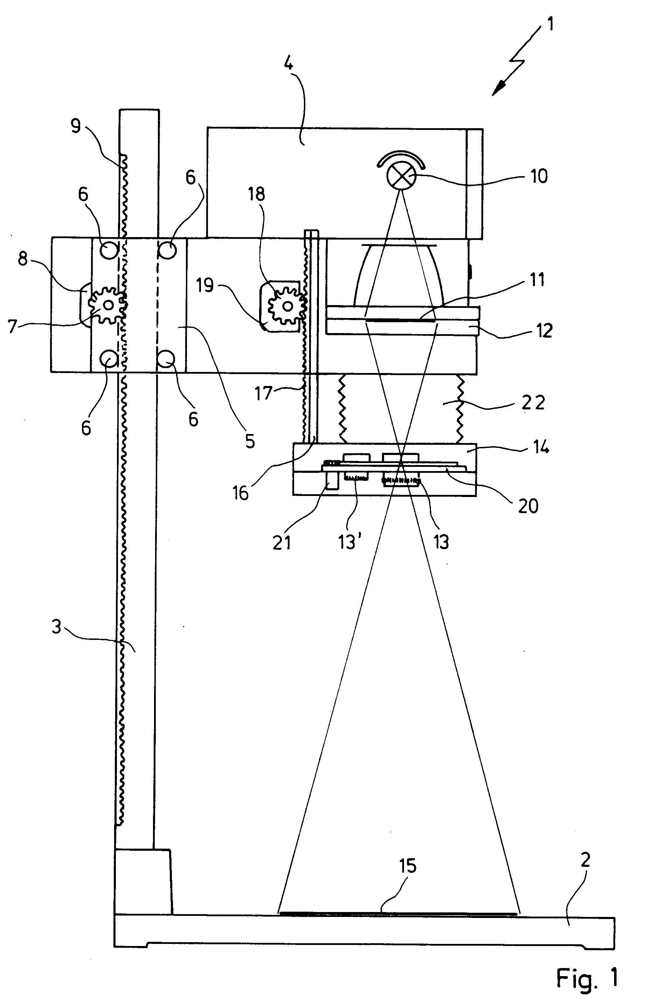

In Fig. 1 ist mit der Bezugsziffer 1 ein fotografisches Vergrößerungsgerät bezeichnet, das im wesentlichen ein Grundbrett 2, eine Tragsäule 3 und einen von dieser getragenen Beleuchtungs-und Projektionskopf 4 umfaßt. Letzterer ist an einem Halteblock 5 befestigt, der von Rollen 6, die an gegenüberliegenden Seiten der Tragsäule an diese anliegen, geführt und längs der Tragsäule verstellbar ist. Ein von einem Motor 8 angetriebenes Zahnrad 7 ist mit einem gezahnten Abschnitt 9 der Tragsäule in Eingriff. Auf diese Weise ist der Projektionskopf 4 motorisch längs der Tragsäule verschiebbar und kann so in eine gewünschte Höhenstellung über dem Grundbrett versetzt werden. Der Projektionskopf 4 umfaßt eine Lichtquelle 10, deren Licht eine in einer Bildbühne 12 gehaltene Kopiervorlage 11 beleuchtet, die von einem Objektiv 13 eines Optikträgers 14 auf das am Grundbrett angeordnete Fotopapier 15 abgebildet wird. Der Optikträger 14 ist am Projektionskopf 4 gehalten und längs Führungsstangen 16 in Richtung der Projektionsachse relativ zur Vorlagenebene verschiebbar. Zu diesem Zwecke ist eine am Optikträger fest angebrachte Zahnstange 17 mit einem am Körper des Projektionskopfes befestigten Zahnrad 18 in Eingriff, das von einem Motor 19 angetrieben wird. Der Optikträger selbst umfaßt eine von einem Motor 21 angetriebene Drehplatte 20, die mehrere Objektive 13, 13′ trägt und um eine mittige Achse so drehbar ist, daß die einzelnen Objektive abwechselnd in die Arbeitsstellung auf der Projektionsachse gelangen. Der Bereich Bildbühne-Optikträger ist von einem lichtdichten Balgen 22 umgeben.

Bekanntlich kann durch Verändern des Abstandes zwischen Bildvorlage und Kopierebene in Verbindung mit der Wahl eines Objektivs geeigneter Brennweite der Vergrößerungsmaßstab innerhalb eines weiten Bereiches eingestellt werden, um die unterschiedlichen Formate sowohl der Kopiervorlagen als auch der gewünschten Abzüge zu berücksichtigen. Das Scharfstellen des projizierten Bildes für jede gewählte Vergrößerung erfolgt durch Verstellen des Optikträgers relativ zur Bildvorlage.

Mit Bezug auf die Figuren 2, 3 und 4 wird im folgenden der Optikträger 14 insbesondere im Hinblick auf die Blendeneinstellung der eingesetzten Objektive genauer beschrieben. Gleiche Teile sind in den Figuren mit derselben Bezugsnummer bezeichnet.

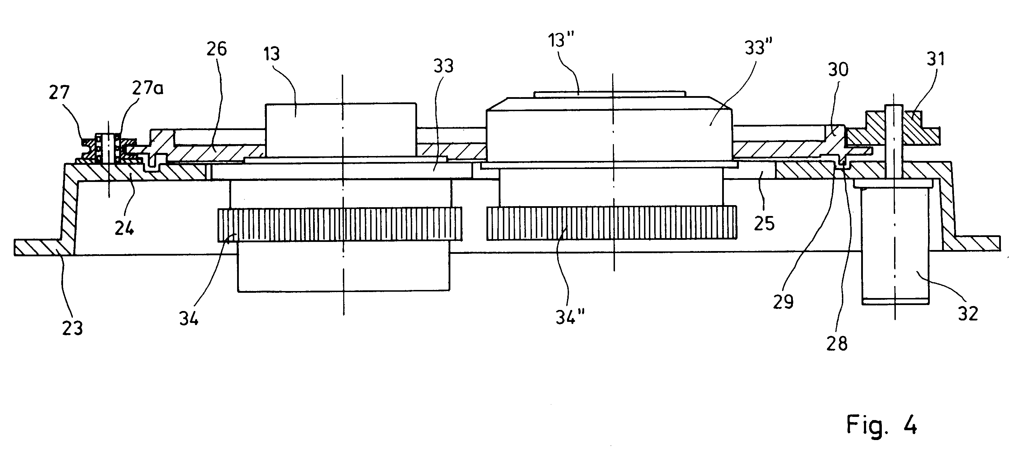

Der Optikträger besteht aus einem im wesentlichen rechteckigen Rahmen 23 mit einem Boden 24, der eine ausgedehnte runde Öffnung 25 aufweist. Eine kreisförmige Objektiv-Trägerplatte 26 ist umfangseitig von vier in Abstand zueinander auf dem Boden 24 drehbar gelagerten Führungsrollen 27 gehalten, derart daß die Platte 26 in einer zum Boden parallelen Ebene in Überlagerung der mittigen Öffnung des Bodens drehbar ist. Wie am besten aus der Figur 4 ersichtlich, weist die Platte 26 auf ihrer dem Rahmen zugewandten Seite einen ringförmigen Vorsprung 28 auf, der frei in eine entsprechende Nut 29 des Bodens 24 eingreift. Dadurch entsteht eine Lichtfalle, die verhindert, daß Licht von einer Seite des Optikträgers auf die andere gelangt. Auf der gegenüberliegenden Seite weist die Objektiv-Trägerplatte einen konzentrischen Zahnkranz 30 auf, der über ein Zahnrad 31 mit einem auf dem Rahmen befestigten Elektromotor 32 gekoppelt ist. Die Objektiv-Trägerplatte 26 ist für die Aufnahme von drei Objektiven 13, 13′, 13˝ ausgelegt, die auf einem mit der Drehachse konzentrischen Kreis angeordnet sind, der die Achse des Projektionssystems schneidet. Auf diese Weise gelangt bei Drehung der Platte ein Objektiv nach dem anderen in den Bereich der Projektionsachse. Die Objektive 13, 13′ und 13˝ sind in eigene Adapterringe 33, 33′ und 33˝ einschraubbar, die ihrerseits mit einer Schraubverbindung auf der Objektiv-Trägerplatte befestigt sind. Die Befestigung ist so ausgeführt, daß die Drehlage mindestens zweier Adapterringe einstellbar ist, wodurch die gegenseitige Drehlage der in die Adapterringe eingeschraubten Objektive veränderbar wird. Jeder Adapterring ist dem einzuschraubenden Objektiv in der Weise angepaßt, daß bei eingeschraubten Objektiven die Blendenringe 34, 34′ und 34˝, mit denen die einzelnen Objektive ausgestattet sind, in einer selben Ebene im Bereich unterhalb der Objektiv-Trägerplatte 26 zu liegen kommen, wie in den Figuren 3 und 4 deutlich erkennbar. Die Blendenringe weisen am Außenumfang eine Zahnung auf und sind durch einen Zahnriemen 35, der über ein Antriebszahnrad 36 läuft, untereinander bewegungsverbunden. Das Zahnrad 36 ist mit einem Elektromotor 37 gekoppelt, der auf der Objektiv-Trägerplatte befestigt ist und sich mit dieser mitbewegt. In den Abschnitten zwischen den einzelnen Blendenringen ist der Zahnriemen über Leitrollen 38 geführt, die auf festen, von der Objektiv-Trägerplatte hervortretenden Bolzen drehbar gelagert und so angeordnet sind, daß die Auflage des Zahnriemens an die Blendenringe und an d s Antriebszahnrad 36 gewährleistet ist. Eine der Leitrollen 38 ist zudem mit einer Rückholfeder 39 radial in Richtung Mittelpunkt der Objektiv-Trägerplatte vorgespannt, so daß sie die Funktion einer Riemenspannrolle erfüllt. Der Rahmen 23 zusammen mit der Objektiv-Trägerplatte ist Teil des Optikträgers 14 und bewegt sich mit diesem in Richtung Projektionsachse des Belichtungssystems wie weiter oben mit Bezug auf die Figur 1 angegeben.

Nach der Beschreibung des mechanischen Aufbaus des Optikträgers in Verbindung mit den Vorrichtungen zur Positionierung der Objektive und Einstellung der Blenden wird im folgenden die Funktionsweise anhand des Funktionsschaltbildes der Figur 5 beschrieben, in der d,e mechanischen Elemente nur schematisch dargestellt und mit den gleichen Bezugsnummern bezeichnet sind, wie in den vorhergehenden Figuren. So ist mit der Nummer 26 die Objektiv-Trägerplatte bezeichnet, mit den Nummern 13, 13′ und 13˝ drei auf der Trägerplatte montierte Objektive, mit 34, 34′ und 34˝ die Blendenringe der einzelnen Objektive und mit 37 deren Stellmotor. Die mit 39 bezeichnete Linie zeigt schematisch eine dynamische Koppelung zwischen den Blendenringen und dem Antriebsmotor an.

Mittelpunkt der Blendensteuerung ist ein Mikroprozessorsystem 41, umfassend eine zentrale Prozessoreinheit 42 und periphäre Elemente wie einen Lesespeicher (ROM) 43 als Programmspeicher, einen Schreib-Lesespeicher (RAM) 44 als Datenspeicher sowie einen Zeitgeber (Clock) 45. Mit dem Mikroprozessorsystem ist über eine Eingabeschnittstelle 46 eine Daten- und Befehleingabeeinheit 47 sowie oder Signalausgang eines Positionsdetektors 50 verbunden, welcher die Drehlage der Objektiv-Trägerplatte 26 hinsichtlich der Identifizierung des in Arbeitsstellung befindlichen Ojektivs angibt. Weiters sind über eine Ausgabeschnittstelle 48 eine Motorsteuereinheit 49 für den Blenden-Stellmotor 37 sowie der Antriebsmotor 32 der Objektiv-Trägerplatte mit dem Mikroprozessorsystem verbunden. Mit dieser Anordnung ist nicht nur das in der Arbeitsstellung befindliche Objektiv identifizierbar, sondern ein ausgewähltes Objektiv ist durch Eingabe eines ihm zugeordneten Kodes automatisch in die Arbeitsstellung bringbar.

In der bevorzugten Ausführung der Blendeneinstellvorrichtung ist der Stellmotor 37 ein Schrittmotor und die Anzahl der ihm zugeführten Steuerimpulse bestimmt das Ausmaß der Drehbewegung der Motorwelle und ist damit indirekt ein Maß für den Blendenverstellweg. Aufgrund der festen Zuordnung der Blendenwerte zur Drehlage der Blendenringe liefert die Zählung der Steuerimpulse, bzw. der Motorschritte ausgehend von einer Anfangs- oder Bezugsposition laufend den aktuellen Blendenwert. Als Anfangsposition wird vorteilhafterweise der Endanschlag der Blendenringe in Richtung des niedrigsten Blendenwertes gewählt.

Das Mikroprozessorsystem ist so programmiert, daß es den aufgenommenen Blenden-Istwert mit einem vorbestimmten, vorab eingegebenen Wert vergleicht, aus dem Vergleich die Anzahl MotorSchritte ermittelt, die zum Nachführen der Blende auf den vorgegebenen Wert erforderlich ist und den Stellmotor entsprechend ansteuert. Das System ist somit für die automatische Einstellung der Blenden auf einen gewünschten, vorher über die Dateneingabeeinheit 47 eingegebenen Wert geeignet.

Das Gesagte setzt voraus, daß die Blendenringe aller Objektive denselben Schritt haben, d. h. daß einer Drehung der Ringe um den gleichen Winkel von der Anfangsposition aus gleiche Blendenwerte für alle Objektive entsprechen. Im Rahmen der Erfindung ist aber auch eine Blendeneinstellung möglich, die für die einzelnen Objektive differenziert ist. Über den Positionsdetektor 50 der Objektiv-Trägerplatte 26 empfängt das Mikroprozessorsystem nämlich die Information, welches der Objektive sich in der Arbeitsstellung befindet und das Prozessor-Programm kann einer individuellen Einstellcharakteristik jeder Blende Rechnung tragen. Eine differenzierte Einstellung der einzelnen Blenden kann auch durch geeignete Wahl des Übersetzungsverhältnisses zwischen dem Antrieb und dem jeweiligen Blendenring, beispielsweise durch Verwendugng von Blendenringen unterschiedlichen Durchmessers erreicht werden.

Der Einsatz eines Schrittmotors erweist sich besonders vorteilhaft hinsichtlich einer platzsparenden Konstruktion und einer kompakten Ausführung des Optikträgers als Ganzes. Im Rahmen der Erfindung kann jedoch als Stellmotor auch ein Gleichstrommotor eingesetzt werden, dem eine gesonderte Einrichtung zur Blendenwerterfassung anhand der Position der Blendenringe zugeordnet ist. Eine derartige Einrichtung ist in Fig. 5 strichliert eingezeichnet, wobei die Bezugsnummer 51 einen Weggeber bezeichnet, der den Verstellweg der Blendenringe in bezug auf eine Anfangsstellung angibt und somit ein für den eingestellten Blendenwert repräsentatives Signal liefert. Als Weggeber in einer solchen Einrichtung kann beispielsweise ein Potentiometer verwendet werden, dessen Schleifer mit den Blendenringen gekoppelt ist. Liegt am Potentiometerwiderstand eine fixe Spannung an, stellt sich am Potentiometerabgriff eine Spannung ein, die ein analoges Meßsignal für den Blendenwert ist und als solches in digitalisierter Form dem Mikroprozessorsystem zugeleitet wird.

Aus praktischen Gründen kann es wünschenswert sein, die Blendeneinstellung auf eine Reihe diskreter Blendenwerte, beispielsweise auf die Werte 5,6 - 8 - 11 - 16 zu beschränken. In diesem Fall ist das Mikroprozessorsystem so vorbereitet, daß nur die Eingabe dieser Werte akzeptiert wird.

Das Mikroprozessorsystem übernimmt vorteilhafterweise auch Kontroll- und Steuerfunktionen im Zusammenhang mit der Bestimmung der Belichtungswerte sowie der Steuerung des Belichtungsablaufs, wie es aus modernen fotografischen Kopiergeräten bekannt ist und deswegen hier nicht näher beschrieben wird.

## Patentansprüche

1. Fotografisches Vergrößerungs- oder Kopiergerät, mit mehreren Objektiven mit verstellbarer Blende, und einer Blendeneinstellvorrichtung mit Mitteln (30, 35) zum gemeinsamen Verstellen der Blenden aller Objektive und mit Mitteln (37, 51) zum Erfassen der Ist-Position der Blenden, dadurch gekennzeichnet, daß
- die Mittel (37, 51) zum Erfassen der Ist-Position der Blenden für eine kontinuierliche Positionserfassung ausgelegt sind,
- die Mittel zum Verstellen der Blenden einen motorischen Antrieb (37) umfassen,
- und daß die Blendeneinstellvorrichtung einen Regelkreis umfaßt, der durch Vergleich der Ist-Position der Blenden mit einer vorgegebenen Soll-Position ein Steuersignal für den Antrieb (37) zum Bewegen der Blenden in die vorgegebene Soll-Position erzeugt, und daß eine Einrichtung zur Identifizierung des in der Arbeitsstellung befindlichen Objektives vorgesehen ist für eine differenzierte Steuerung der Blende eines jeden Objektivs entsprechend seiner individuellen Einstellcharakteristik.

2. Fotografisches Vergrößerungs- oder Kopiergerät nach Anspruch 1, dadurch gekennzeichnet, daß die Objektive Blendenringe (34, 34', 34'') mit einer Zahnung aufweisen, die durch einen Zahnriemen (35) untereinander und mit dem Antrieb (37) bewegungsverbunden sind.

3. Fotografisches Vergrößerungs- oder Kopiergerät nach Anspruch 2, dadurch gekennzeichnet, daß der Antrieb (37) einen Schritt-Motor umfaßt, dessen Schrittzahl im Betrieb zur Bestimmung der Ist-Position verwendbar ist.

4. Fotografisches Vergrößerungs- oder Kopiegerät nach Anspruch 2, dadurch gekennzeichnet, daß der Antrieb (37) einen Gleichstrommotor umfaßt und die Mittel zum Erfassen der Ist-Position einen Winkelgeber (51) umfassen, der mit den Blendenringen (34, 34', 34'') bewegungsverbunden ist und so das Maß für die Ist-Position liefert.

5. Fotografisches Vergrößerungs- oder Kopiergerät nach Anspruch 4, dadurch gekennzeichnet, daß der Winkelgeber (51) ein Meßpotentiometer umfaßt.

6. Fotografisches Vergrößerungs- oder Kopiergerät nach Anspruch 1, dadurch gekennzeichnet, daß der Regelkreis ein Mikroprozessorsystem (41) umfaßt.

7. Fotografisches Vergrößerungs- oder Kopiergerät nach Anspruch 6, dadurch gekennzeichnet, daß die Einrichtung zur Identifizierung des Objektivs und zur Steuerung der Blende das Mikroprozessorsystem (41) umfaßt.

8. Fotografisches Vergrößerungs- oder Kopiergerät nach einem der vorhergehenden Ansprüche, dadurch gekennzeichnet, daß der Antrieb unterschiedliche Übersetzungsverhältnisse in Bezug auf die einzelnen Blendenringe aufweist.

## Claims

1. Photographic enlarging or copying apparatus comprising a plurality of lenses with adjustable aperture and an aperture-setting device with means (30, 35) for adjusting the apertures of all the lenses together and with means (37, 51) for detecting the actual position of the apertures, characterised in that
- the means (37, 51) for detecting the actual position of the apertures are designed for continuous position detection,
- the means for adjusting the apertures include a motor drive (37),
- and the aperture-setting device includes a control circuit which, by comparing the actual position of the apertures with a predetermined desired position, generates a control signal for the drive (37) to move the apertures into the predetermined desired position, and a device for identifying the lens that is in the working position is provided for a differentiated control of the aperture of each lens in accordance with its individual setting characteristics.

2. Photographic enlarging or copying apparatus according to claim 1, characterised in that the lenses have aperture rings (34, 34', 34'') with toothing which are motionally connected to one another and to the drive (37) by a toothed belt (35).

3. Photographic enlarging or copying apparatus according to claim 2, characterised in that the drive (37) includes a stepping motor, the number of steps of which during operation can be used to determine the actual position.

4. Photographic enlarging or copying apparatus according to claim 2, characterised in that the drive (37) includes a d.c. motor and the means for detecting the actual position include an angle indicator (51) which is motionally connected to the aperture rings (34, 34', 34'') and thus provides the measure of the actual position.

5. Photographic enlarging or copying apparatus according to claim 4, characterised in that the angle indicator (51) includes a measuring potentiometer.

6. Photographic enlarging or copying apparatus according to claim 1, characterised in that the control circuit includes a microprocessor system (41).

7. Photographic enlarging or copying apparatus according to claim 6, characterised in that the device for identifying the lens and for controlling the aperture includes the microprocessor system (41).

8. Photographic enlarging or copying apparatus according to any one of the preceding claims, characterised in that the drive has different transmission ratios with regard to the individual aperture rings.

## Revendications

1. Agrandisseur ou tireuse photographique comprenant plusieurs objectifs à diaphragme réglable et un dispositif de réglage des diaphragmes comprenant lui-même des moyens (30,35) servant pour le réglage commun des diaphragmes de tous les objectifs, et des moyens, (37, 51) servant à capter la position réelle des diaphragmes, caractérisé en ce que,
- les moyens (37, 51) de détection de la position réelle des diaphragmes sont construits pour assurer la détection continue de la position,
- les moyens prévus pour le réglage des diaphragmes comprennent un entraînement à moteur (37),
- et en ce que le dispositif de réglage des diaphragmes comprend un circuit de réglage qui produit, par comparaison de la position réelle des diaphragmes avec une position de consigne prédéterminée, un signal de commande pour l'entraînement (37) servant à placer les diaphragmes dans la position de consigne prédéterminée, et en ce qu'un dispositif d'identification de l'objectif qui se trouve en position de travail est prévu pour assurer une commande différenciée du diaphragme de chaque objectif en fonction de sa caractéristique de réglage individuel.

2. Agrandisseur ou tireuse photographique selon la revendication 1, caractérisé en ce que les objectifs présentent des bagues de diaphragme (34, 34', 34'') munies d'une denture et qui sont accouplées cinématiquement entre elles et à l'entraînement (37) par une courroie crantée (35).

3. Agrandisseur ou tireuse photographique selon la revendication 2, caractérisé en ce que l'entraînement (37) comprend un moteur pas-à-pas dont le nombre de pas peut être utilisé en fonctionnement pour la détermination de la position réelle.

4. Agrandisseur ou tireuse photographique selon la revendication 2, caractérisé en ce que l'entraînement (37) comprend un moteur à courant continu et les moyens servant à détecter la position réelle comprennent un capteur d'angle (51) qui est accouplé cinématiquement aux bagues de diaphragme (34, 34', 34'') et fournit ainsi la mesure de la position réelle.

5. Agrandisseur ou tireuse photographique selon la revendication 4, caractérisé en ce que le capteur d'angle (51) comprend un potentiomètre de mesure.

6. Agrandisseur ou tireuse photographique selon la revendication 1, caractérisé en ce que le circuit de réglage comprend un système à microprocesseur (41).

7. Agrandisseur ou tireuse photographique selon la revendication 6, caractérisé en ce que le dispositif d'identification de l'objectif et de commande du diaphragme comprend le microprocesseur (41).

8. Agrandisseur ou tireuse photographique selon une des revendications précédentes, caractérisé en ce que l'entraînement présente des rapports de transmission différents pour les différentes bagues de diaphragme.
